# EUROPEAN PATENT APPLICATION

(11) **EP 4 664 617 A1**
(43) Date of publication of application: **17.12.2025**
(21) Application number: 25171620.5
(22) Date of filing: 22.04.2025
(51) Int. Cl.: H01M 50/103, H01M 50/133, H01M 10/04

(54) **ELECTRICITY STORAGE DEVICE**

(30) Priority: 10.06.2024 JP 2024093476
(71) Applicant: Prime Planet Energy & Solutions, Inc., Chuo-ku, Tokyo 103-0022 (JP)
(72) Inventor: TACHIBANA, Nobuyoshi, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

A battery (100) being as one aspect of a herein disclosed electricity storage device includes a case main body (12) which is formed in a rectangular cylindrical shape and whose both sides in a length direction are opened, an electrode assembly (20) that is accommodated by the case main body (12), a first lid body (14a) that is installed on an opening at one end side in the length direction of the case main body (12), and a second lid body (14b) that is installed on an opening at the other end side in the length direction of the case main body (12). The case main body (12) includes a pair of wide width surfaces (12b) being opposed to each other, and a pair of narrow width surfaces (12a) that are opposed to each other and that are configured to continue to the pair of wide width surfaces (12b). A recessed part (12a1) configured to elongate along the length direction of the case main body (12) is present at an inner side of at least one narrow width surface (12a) of the pair of narrow width surfaces (12a).

## Description

### BACKGROUND OF THE DISCLOSURE

### 1. Field

The present disclosure relates to an electricity storage device.

### 2. Background

Japanese Patent Application Publication No. 2001-57179 discloses a secondary battery that includes a battery case consisting of a battery can and a battery lid which is configured to seal a maximum opening part of this battery can. In addition, a description of Chinese Utility Model 219017778 discloses a battery provided with a battery case that includes a housing and an end cap, discloses that an outer wall of this housing includes a bottom wall, two first side walls being arranged oppositely, and two second side walls being arranged oppositely, and that these two first side walls are opposed to a maximum surface of an electrode assembly.

### SUMMARY

Anyway, for example, regarding an electricity storage device in which an electrode assembly is inserted along a length direction of a case main body being formed in a rectangular cylindrical shape and having both ends opened, it is expected to enhance a productivity.

The herein disclosed electricity storage device includes a case main body which is formed in a rectangular cylindrical shape and whose both sides in a length direction are opened, includes an electrode assembly that is accommodated by the case main body, includes a first lid body that is installed on an opening at one end side in the length direction of the case main body, and includes a second lid body that is installed on an opening at the other end side in the length direction of the case main body. In addition, the case main body includes a pair of wide width surfaces being opposed to each other and a pair of narrow width surfaces that are opposed to each other and that are configured to continue to the pair of wide width surfaces. And, a recessed part configured to elongate along the length direction of the case main body is present at an inner side of at least one narrow width surface of the pair of narrow width surfaces. According to the electricity storage device described above, it is possible to suitably enhance the productivity of it.

### BRIEF DESCRIPTION OF THE DRAWINGS

FIG. 1 is a perspective view that schematically shows a battery in accordance with one embodiment.
FIG. 2 is a perspective view in which the battery of FIG. 1 is vertically reversed.
FIG. 3 is a schematic view that shows an inside structure of the battery of FIG. 1.
FIG. 4 is a perspective view that schematically shows an electrode assembly attached to a lid body.
FIG. 5 is a schematic view that shows a configuration of a case main body in accordance with one embodiment.
FIG. 6 is a schematic view that shows an insertion of the electrode assembly in accordance with one embodiment into the case main body.
FIG. 7 is a schematic view that shows an aspect in which the electrode assembly is inserted into the case main body of FIG. 5.
FIG. 8 is an explanation view that is for explaining a vicinity of a recessed part of FIG. 5.
FIG. 9 is an explanation view that is for explaining a restriction of the battery in accordance with one embodiment.
FIG. 10 is an explanation view that is for explaining a situation where the recessed part is present on a wide width surface.
FIG. 11 is a correspondence diagram that shows an inside of a broken-line round frame of FIG. 5 in accordance with a second embodiment.
FIG. 12 is a correspondence diagram that shows the inside of the broken-line round frame of FIG. 5 in accordance with a third embodiment.
FIG. 13 is a correspondence diagram that shows the inside of the broken-line round frame of FIG. 5 in accordance with a fourth embodiment.
FIG. 14 is a correspondence diagram that shows the inside of the broken-line round frame of FIG. 5 in accordance with a fifth embodiment.
FIG. 15 is a correspondence diagram that shows the inside of the broken-line round frame of FIG. 5 in accordance with a sixth embodiment.
FIG. 16 is a correspondence diagram that shows the inside of the broken-line round frame of FIG. 5 in accordance with a seventh embodiment.
FIG. 17 is a correspondence diagram that shows the inside of the broken-line round frame of FIG. 5 in accordance with an eighth embodiment.
FIG. 18 is a schematic view that shows a configuration of a case main body case in accordance with another embodiment.

### DETAILED DESCRIPTION

Below, some embodiments of a herein disclosed technique will be explained, while referring to drawings. In the following drawings, the same numerals and signs are given to the members/parts providing the same effect. In addition, a dimensional relation in each drawing (a length, a width, a thickness, or the like) does not reflect an actual dimensional relation. Incidentally, the matters other than matters particularly mentioned in this description and required for practicing the present disclosure (for example, a general configuration and manufacture process of an electricity storage device which do not characterize the present disclosure) can be grasped as design matters of those skilled in the art based on the related art in the present field. The herein disclosed technique can be executed based on the contents disclosed in the present description, and on the technical common sense in the present field. In addition, an explanation described below is not intended to restrict the present disclosure to below-described forms.

A wording "A to B" representing a range in the present description is to mean "equal to or more than A and not more than B", and to furthermore semantically cover meanings "more than A" and "less than B". In addition, a wording "electricity storage device" in the present description represents a device that can perform an electrical charge and an electrical discharge. The electricity storage device semantically covers a battery, such as primary battery and secondary battery (for example, a nonaqueous electrolyte secondary battery, such as lithium ion secondary battery, and a nickel hydrogen battery), and a capacitor (a physical battery), such as electric double layer capacitor. In addition, the electrolyte might be a liquid-type electrolyte (an electrolytic solution), a gel-type electrolyte, or a solid-type electrolyte. Below, the lithium ion secondary battery (below, simply referred to as "battery 100", too) being one embodiment of the herein disclosed electricity storage device will be explained as an example.

### <Configuration of Battery>

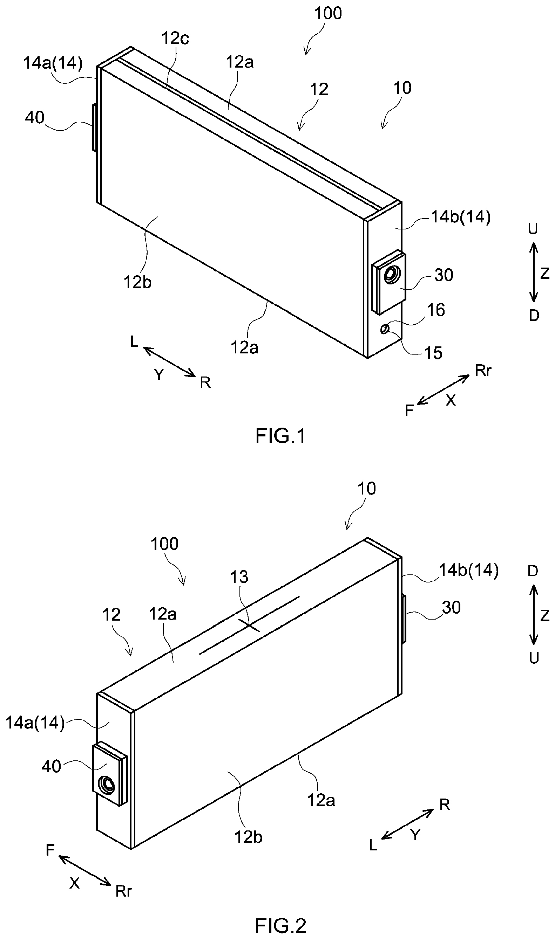

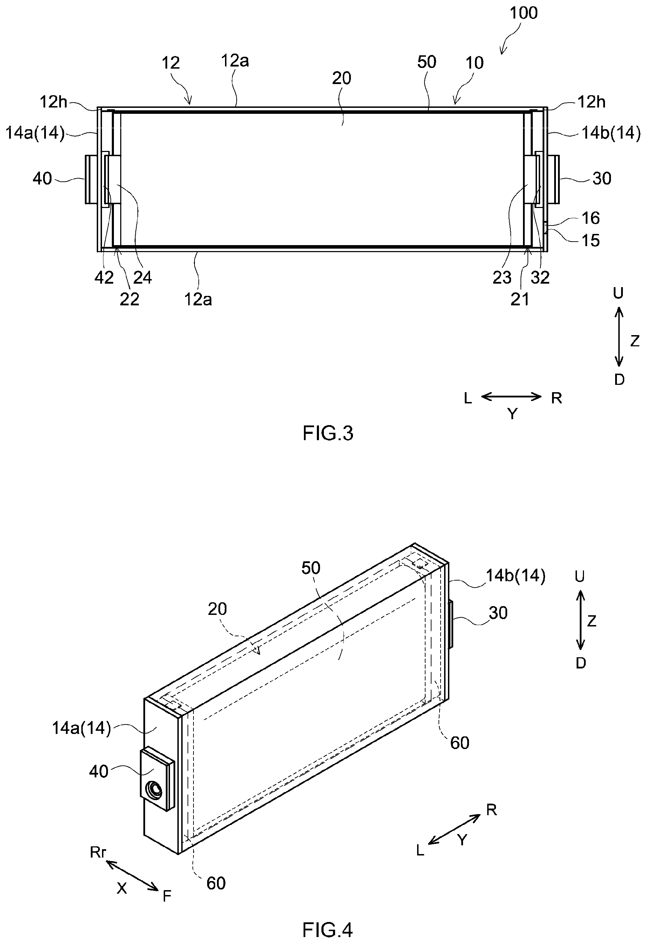

FIG. 1 is a perspective view of a battery 100 in accordance with one embodiment. FIG. 2 is a perspective view in which the battery 100 of FIG. 1 is vertically reversed. FIG. 3 shows an inside structure of the battery 100 of FIG. 1. Incidentally, in the explanation described below, reference signs L, R, F, Rr, U, and D of drawings respectively represent left, right, front, rear, up, and down, and reference signs X, Y, and Z of drawings respectively represent a short side direction of the battery 100, a long side direction being orthogonal to the short side direction, and a vertical direction being orthogonal to the short side direction and the long side direction. However, these directions are defined for convenience sake of explanation, and are not intended to restrict a disposed aspect of the battery 100.

As shown in FIG. 3, the battery 100 includes a battery case 10, an electrode assembly 20, a positive electrode terminal 30, a negative electrode terminal 40, and an insulation film 50. As the illustration is omitted, the battery 100 herein further includes an electrolytic solution. The battery 100 herein is a lithium ion secondary battery. It is preferable that the battery 100 is the lithium ion secondary battery.

The battery case 10 is a housing that is configured to accommodate the electrode assembly 20, the insulation film 50, and the electrolytic solution. As shown in FIG. 1 and FIG. 2, the battery case 10 has an outer appearance that is formed in a flat and bottomed rectangular parallelopiped shape (a square shape). A material of the battery case 10 might be the same as a conventionally used material, and is not particularly restricted. It is preferable that the battery case 10 is made of metal, and it is more preferable that, for example, the battery case is made of aluminum, aluminum alloy, iron, iron alloy, or the like.

As shown in FIG. 3, the battery case 10 includes a case main body 12 having a pair of openings 12h, and includes two lid bodies 14 (for more detail, a first lid body 14a and a second lid body 14b) configured to cover the pair of openings 12h. The battery case 10 is integrated by joining (for example, welding and joining) the lid bodes 14 respectively at peripheral edges of the pair of openings 12h of the case main body 12. The battery case 10 is airtightly sealed (hermetically sealed).

The case main body 12 is formed in a rectangular cylindrical shape, and includes the openings 12h at both sides in a length direction of it (corresponding to the Y direction of FIG. 3). In the present embodiment, the case main body 12 is formed in the rectangular cylindrical shape having the rectangular openings 12h at the both ends, and is formed in an elongated shape in which the length direction is sufficiently longer with respect to a long side of the opening 12h. On the other hand, the opening 12h is formed in a shape that is a little wider than a cross section at a time of cutting along the opening 12h of the electrode assembly 20. Further particularly, as shown in FIG. 1, the case main body 12 includes a narrow width surface 12a formed in an approximately rectangular shape, a pair of wide width surfaces 12b extending from long sides of the narrow width surface 12a and being opposed mutually, and the other narrow width surface 12a configured to couple top end parts of the pair of wide width surfaces 12b to each other. The wide width surface 12b is formed in an approximately rectangular shape. The narrow width surface 12a is opposed to the other narrow width surface 12a. It is possible to say that the case main body 12 includes the pair of wide width surfaces 12b being opposed to each other and includes the pair of narrow width surfaces 12a configured to continue to the pair of wide width surfaces 12b and to be opposed to each other. An area size of the narrow width surface 12a is smaller than the wide width surface 12b. The case main body 12 is formed, for example, by folding and bending one metal plate to mold the metal plate formed in a cylindrical shape and then by joining (for example, welding and joining) a seam. Here, a welded and joined part 12c is positioned on one of the narrow width surfaces 12a. On the other one of the narrow width surfaces 12a, a gas exhaust valve 13 is provided. Incidentally, in drawings later than FIG. 4, the welded and joined part 12c is omitted for the sake of implementing easily viewable manner.

The gas exhaust valve 13 is configured to be broken when a pressure inside the battery case 10 becomes equal to or more than a predetermined value, so as to exhaust the gas inside the battery case 10 toward an outside. Incidentally, in the present embodiment, a number of the gas exhaust valve 13 is one, but the number might be equal to or more than 2. Additionally, in the present embodiment, the gas exhaust valve 13 is provided on the narrow width surface 12a, but the gas exhaust valve 13 in another embodiment might be provided on a surface other than the narrow width surface 12a, for example, on the wide width surface 12b, the lid body 14, or the like. In addition, an area size of the gas exhaust valve 13 is arbitrary.

In the present embodiment, the gas exhaust valve 13 is a notch formed in a cruciate shape. However, a shape of the gas exhaust valve 13 is not restricted, particularly. In another embodiment, the gas exhaust valve 13 might be a notch, for example, formed in a line shape (only a vertical line or a horizontal line), or might be a conventionally known oval-shaped valve (having a notch at the inside of it), a circle-shaped valve (having a notch at the inside of it), or the like. In addition, a dimension (a length, or a depth) of the notch is arbitrary, and could be suitably decided in consideration of, for example, a pressure resistance of the battery case 10, or the like.

The lid body 14 is a plate-shaped member that is configured to seal the opening 12h. The lid body 14 is approximately rectangular in a plane view. As shown by FIG. 3, in the present embodiment, regarding the lid body 14, there are a first lid body 14a that is installed on the opening 12h at one end side in the length direction of the case main body 12 (corresponding to the Y direction of FIG. 3), and a second lid body 14b that is installed on the opening 12h at the other end side in the length direction of the case main body 12. An area size of the lid body 14 is smaller than the wide width surface 12b. The lid body 14 is provided with a liquid injection hole 15. The liquid injection hole 15 is for injecting the electrolytic solution to the inside of the battery case 10 after the lid body 14 is assembled on the case main body 12. The liquid injection hole 15 is sealed by a sealing member 16 after a liquid injection of the electrolytic solution. Incidentally, in the present embodiment, the liquid injection hole 15 is provided on the lid body 14, but in another embodiment, the liquid injection hole 15 might be provided on the case main body 12. Additionally, in the present embodiment, the liquid injection hole 15 is provided on a surface different from the gas exhaust valve 13, but in another embodiment, the liquid injection hole 15 might be provided on a surface the same as the gas exhaust valve 13.

Each of the positive electrode terminal 30 and the negative electrode terminal 40 is fixed to the battery case 10. The positive electrode terminal 30 and the negative electrode terminal 40 are respectively fixed to opposed surfaces (in particular, the lid bodies 14) of the battery case 10. For more detail, the positive electrode terminal 30 is attached to the lid body 14 that is arranged at one side (a right side of FIG. 1 and FIG. 2) of the long side direction Y. The negative electrode terminal 40 is attached to the lid body 14 that is arranged at the other side (a left side of FIG. 1 and FIG. 2) of the long side direction Y. Incidentally, in the present embodiment, the positive electrode terminal 30 and the negative electrode terminal 40 are provided on the lid bodies 14, but in another embodiment, the positive electrode terminal 30 and the negative electrode terminal 40 might be provided on the case main body 12. Alternatively, in another embodiment, both of the positive electrode terminal 30 and the negative electrode terminal 40 might be provided on one of the lid bodies 14. Additionally, in the present embodiment, the positive electrode terminal 30 and the negative electrode terminal 40 are provided on the surface different from the gas exhaust valve 13, but in another embodiment, the positive electrode terminal 30 and the negative electrode terminal 40 might be provided on a surface the same as the gas exhaust valve 13.

The positive electrode terminal 30 and the negative electrode terminal 40 are respectively exposed to surfaces at outer sides of lid bodies 14. The positive electrode terminal 30 and the negative electrode terminal 40 herein are arranged on an axis line that is configured to extend in a long side direction Y and passes through a center of the lid body 14. However, in another embodiment, the axis line might be, for example, shifted to a short side direction X from the center of the lid body 14. In addition, the positive electrode terminal 30 and the negative electrode terminal 40 might not be arranged on the axis line. For example, it is good that one of the positive electrode terminal 30 and the negative electrode terminal 40 is shifted to one side of the short side direction X and the other one of them is shifted to the other side in the short side direction X.

It is preferable that the positive electrode terminal 30 is made of metal, and it is more preferable that the positive electrode terminal is made of, for example, aluminum or aluminum alloy. it is preferable that the negative electrode terminal 40 is made of metal, and it is more preferable that the negative electrode terminal is made of, for example, copper or copper alloy.

As shown in FIG. 3, the positive electrode terminal 30 is electrically connected to a positive electrode 21 of the electrode assembly 20 via a positive electrode collecting member 32 at an inside of the battery case 10. The negative electrode terminal 40 is electrically connected to a negative electrode 22 of the electrode assembly 20 via a negative electrode collecting member 42 at the inside of the battery case 10. The positive electrode terminal 30 and the negative electrode terminal 40 are insulated from the case main body 12 by the insulation film 50. The positive electrode terminal 30 and the negative electrode terminal 40 are insulated from the lid body 14 by an insulating member 60 (see FIG. 4).

The electrode assembly 20 is accommodated at an inside of the battery case 10. FIG. 4 is a perspective view of the electrode assembly 20 that is attached to the lid body 14. As shown in FIG. 4, the electrode assembly 20 is arranged at the inside of the battery case 10 under a state of being covered by an insulation film 50 described later. In the present embodiment, one electrode assembly 20 is accommodated at the inside of one battery case 10. However, a number of the electrode assemblies 20 accommodated at the inside of one battery case 10 is not particularly restricted, and in another embodiment, it might be equal to or more than 2.

The electrode assembly 20 includes the positive electrode 21 and the negative electrode 22, as shown in FIG. 3. The electrode assembly 20 herein is a wound electrode assembly. **In** particular, the electrode assembly 20 is formed by winding a laminate body in a longitudinal direction about a winding axis being treated as a center, the laminate body configured by laminating the positive electrode 21 formed in a strip-like shape and the negative electrode 22 formed in a strip-like shape via a separator formed in a strip-like shape. However, in another embodiment, the electrode assembly 20 might be a laminate electrode assembly configured by stacking a square positive electrode and a square negative electrode under a state of being insulated.

The electrode assembly 20 herein has an outer shape being a flat shape. The electrode assembly 20 includes a pair of bent parts and a pair of flat surfaces configured to couple the pair of bent parts. The electrode assembly 20 herein is accommodated at the inside of the battery case 10 with the winding axis directed along the long side direction Y (the configuration described above is referred to as horizontally winding type). The pair of bent parts of the electrode assembly 20 are respectively opposed to the pair of narrow width surfaces 12a of the case main body 12. The pair of flat surfaces of the electrode assembly 20 are respectively opposed to the pair of wide width surfaces 12b of the case main body 12. However, the electrode assembly 20 might be accommodated, for example, at the inside of the battery case 10 to have the winding axis directed to the vertical direction Z (the configuration described above is referred to as vertically winding type). Each of members (the positive electrode, the negative electrode, the separator, and the like) configuring the electrode assembly 20 might be a similar to a general secondary battery, which is not restricted particularly.

The positive electrode 21 is typically to include a positive electrode current collector, and a positive electrode active material layer that is fixed on at least one of surfaces of the positive electrode current collector. The positive electrode current collector herein is formed in a strip-like shape. The positive electrode current collector consists of, for example, an electrically conductive metal, such as aluminum, aluminum alloy, nickel, and stainless steel. The positive electrode current collector herein is a metal foil, in particular, an aluminum foil.

The positive electrode active material layer is provided in a strip-like shape along a longitudinal direction of the positive electrode current collector formed in a strip-like shape. The positive electrode active material layer includes a positive electrode active material that can reversibly store and release a charge carrier. As the positive electrode active material, it is preferable to use an oxide containing at least 1 kind among Ni, Co, and Mn, and it is possible to use, for example, a lithium-transition metal complex oxide, such as lithium cobalt oxide, lithium manganate, lithium nickelate, lithium nickel manganese composite oxide, and lithium nickel cobalt composite oxide. The positive electrode active material is, for example, a composite oxide containing the Ni and the Li, and it is preferable to contain a lithium nickel composite oxide whose Ni content amount of this composite oxide is within a range of 70 to 100 mol% with respect to a total mol amount of constituent elements excluding the Li and the oxygen of this composite oxide. In addition, the positive electrode active material contains one in which a part of the Ni, the Co, and the Mn is substituted to Al, Ti, Zr, P, B, Si, Nb, C, or the like, whose particle surface is covered by chemical compounds containing Al, Ti, Zr, W, P, Si, B, Nb, C, or the like. As a substitution amount and an adding amount, the total is adjusted to about 0.1 to 7 mol%.

The negative electrode 22 is typically to include a negative electrode current collector and a negative electrode active material layer that is fixed on at least one of surfaces of the negative electrode current collector. The negative electrode current collector herein is formed in a strip-like shape. The negative electrode current collector consists of, for example, an electrically conductive metal, such as copper, copper alloy, nickel, and stainless steel. The negative electrode current collector herein is a metal foil, in particular, a copper foil.

The negative electrode active material layer is provided in a strip-like manner along the longitudinal direction of the strip-like shaped negative electrode current collector. The negative electrode active material layer can reversibly store and release a charge carrier negative electrode active material. As the negative electrode active material, it is possible to use, for example, a carbon material, such as graphite and carbon, a metal that can store the lithium, such as Si, SiO, SiC, and Sn, and a chemical compound of it.

The separator is a member that is configured to establish an insulation between the positive electrode active material layer and the negative electrode active material layer. As the separator, for example, a porous resin sheet is suitable that consists of a polyolefin resin, such as polyethylene (PE) and polypropylene (PP). On a surface of the separator, a heat resistance layer (Heat Resistance Layer: HRL) containing an inorganic filler might be provided. As the inorganic filler, for example, it is possible to use alumina, boehmite, aluminum hydroxide, titania, or the like.

The electrode assembly 20 includes a positive electrode tab 23 and a negative electrode tab 24 that are configured to extend respectively to opposite directions. The positive electrode tab 23 is a portion that is configured to extend from an end part at a first side (a right side) of the electrode assembly 20 toward the first side. The positive electrode tab 23 is a portion on which the positive electrode active material layer is not formed and on which the positive electrode current collector is exposed. The positive electrode tab 23 is configured by layering the positive electrode current collectors protruding to the first side in multiple layers. The negative electrode tab 24 is a portion that is configured to extend from an end part at a second side (a left side) of the electrode assembly 20 toward the second side. The negative electrode tab 24 is a portion on which the negative electrode active material layer is not formed and on which the negative electrode current collector is exposed. The negative electrode tab 24 is configured by layering the negative electrode current collectors protruding to the second side in multiple layers.

The electrolytic solution is accommodated together with the electrode assembly 20 at the inside of the battery case 10. It is sufficient that the electrolytic solution is similar to a general secondary battery, which is not restricted particularly. The electrolytic solution is typically a nonaqueous liquid-type electrolyte (nonaqueous electrolytic solution) that contains a nonaqueous solvent and a supporting salt. The nonaqueous solvent contains, for example, carbonates, such as ethylene carbonate (EC), ethyl methyl carbonate (EMC), and dimethyl carbonate (DMC). It is preferable as the nonaqueous solvent to use one in which the EC, the EMC, and the DMC are mixed to make each of them be within a range 1 to 99% so as to make a total rate be 100% by a volume base. The supporting salt is, for example, a fluorine-containing lithium salt. As the fluorine-containing lithium salt, it is preferable to contain lithium hexafluorophosphate (LiPF₆), lithium bis(fluorosulfonyl)imide (F₂LiNO₄S₂) referred to as LiFSI, or a mixture of them. A concentration of the supporting salt is preferably set to be 0.6 to 1.8 mol by 1 L of the nonaqueous solvent.

The insulation film 50 is accommodated together with the electrode assembly 20 at the inside of the battery case 10. The insulation film 50 is arranged between the battery case 10 and the electrode assembly 20. The insulation film 50 is configured, as shown in FIG. 4, to cover a periphery of the electrode assembly 20. For more detail, it is preferable that the insulation film 50 covers, at least, a bent part opposed to one of the narrow width surfaces 12a of the electrode assembly 20 and a pair of flat surfaces. The insulation film 50 is, for example, formed by one sheet-shaped member that is assembled in a box shape, a bag shape, or a cylindrical shape.

Anyway, the present inventor thinks, from a perspective of mounting efficiency to a vehicle, to provide a square shape battery including the case main body 12 formed in a rectangular cylindrical shape being horizontally elongated and having a large aspect ratio, as shown in FIG. 1 and FIG. 2, which is the battery 100 provided with the positive electrode terminal 30 and the negative electrode terminal 40 on the lid body 14 at the end surface. In addition, as the case main body 12 configured to accommodate the electrode assembly 20, it is possible to suitably use the case main body 12 formed in the elongated cylindrical shape. In addition, the present inventor thinks that the positive electrode terminal 30 and the negative electrode terminal 40 are provided on the lid body 14 and that a dead space around the cylindrical case main body 12 in the longitudinal direction is made to be smaller. From the perspective described above, it is desirable that, on a cross section of the cylindrical case main body 12 in a direction orthogonal to the longitudinal direction, a difference between an inner diameter dimension of the case main body 12 and the electrode assembly 20 is made to be smaller. On the other hand, regarding the battery 100 having the configuration described above, it is expected to insert the electrode assembly from one end of the rectangular cylindrical case main body 12 whose both ends are opened. In this situation, it is expected to smoothly insert the electrode assembly 20 into the rectangular cylindrical case main body 12. Especially, in consideration of a mass production in the future, it is preferable that the battery 100 can be manufactured by a machine. For the mechanization described above, it becomes important to make the case main body 12 have a configuration in which the electrode assembly 20 can be inserted easily.

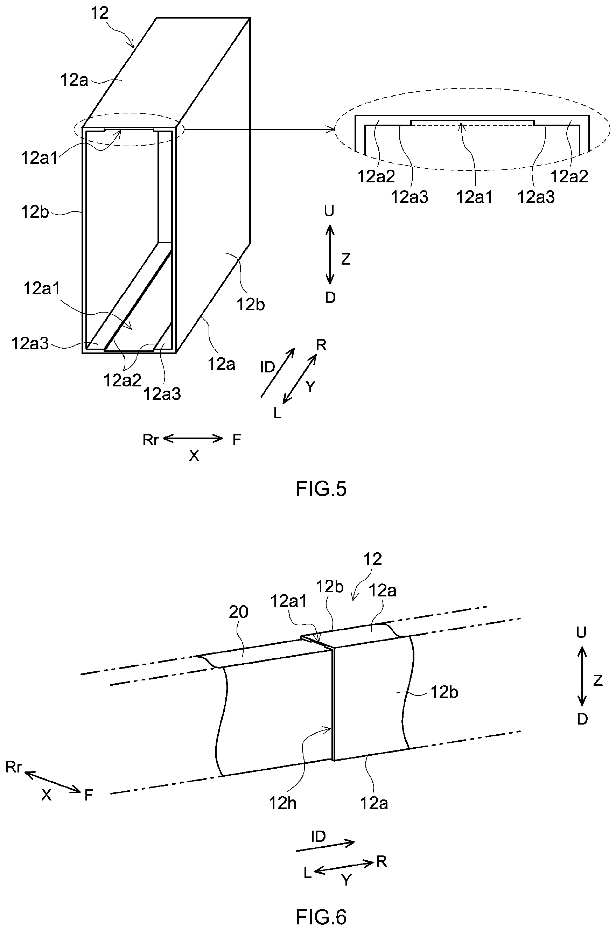

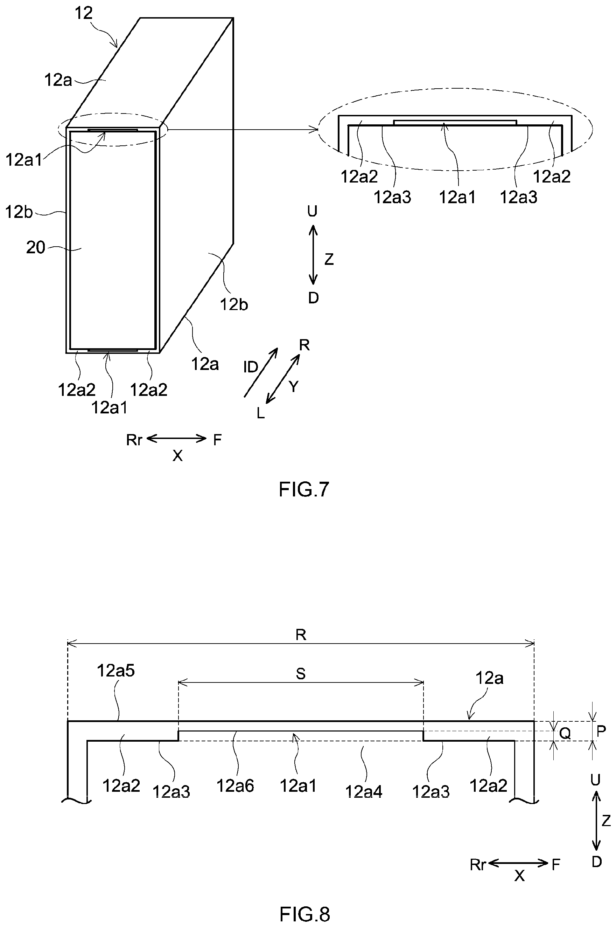

Then, a configuration characterizing the battery 100 in accordance with the present embodiment will be described. Here, FIG. 5 is a schematic view that shows a configuration of the case main body in accordance with one embodiment. FIG. 6 is a schematic view that shows an insertion of the electrode assembly in accordance with one embodiment into the case main body. FIG. 7 is a schematic view that shows an aspect in which the electrode assembly is inserted into the case main body of FIG. 5. Incidentally, regarding the battery 100 in accordance with the present embodiment, FIG. 6 shows a state where one end of the electrode assembly 20 is inserted into the opening 12h at one end of the case main body 12. In FIG. 6, excluding a portion in which one end of the electrode assembly 20 is inserted into the opening 12h at one end of the case main body 12, illustrations are omitted by two-dot chain lines. Additionally, in FIG. 7, for the sake of making drawings be in an easily viewable manner, illustrations of the negative electrode tab 24 are omitted. Firstly, as described above, the battery 100 in accordance with the present embodiment includes the case main body 12 that is formed in the rectangular cylindrical shape whose both sides in the length direction (corresponding to the Y direction of FIG. 6) are opened, the electrode assembly 20 that is accommodated by the case main body 12, the first lid body 14a that is installed on the opening 12h at one end side of the case main body 12 in the length direction (corresponding to the Y direction of FIG. 6), and the second lid body 14b that is installed on the opening 12h at the other end side of the case main body 12 in the length direction. The case main body 12 includes the pair of wide width surfaces 12b that are opposed to each other, and the pair of narrow width surfaces 12a that are configured to continue to the pair of wide width surfaces 12b and are opposed to each other. Then, as shown by FIG. 5, the battery 100 in accordance with the present embodiment is characterized by including a recessed part 12a1 that is configured to elongate along the length direction of the case main body 12, and the recessed part is arranged at least at an inner side of one narrow width surfaces 12a (here, both narrow width surfaces) among the pair of narrow width surfaces 12a. Incidentally, it can be said that the recessed part 12a1 is a portion recessed further in the thickness direction (corresponding to the Z direction of FIG. 5) of the narrow width surface 12a, when the inner surface (corresponding to 12a3 of FIG. 8) of the narrow width surface 12a is treated as a reference.

According to the battery 100 having the configuration described above, as shown in FIG. 6, when the electrode assembly 20 is inserted into the case main body 12 (see FIG. 6), the electrode assembly 20 does not come into contact with the case main body 12 which includes the recessed part 12a1 of the narrow width surface 12a. Thus, when the electrode assembly 20 is inserted into the case main body 12, a contact area size of an inner surface of the case main body 12 with the electrode assembly 20 is decreased. **In** other words, a resistance in an insertion direction (corresponding to an ID direction of FIG. 6) is suitably decreased. By doing this, an insertability of the electrode assembly 20 into the case main body 12 is enhanced. Therefore, it is possible to suitably enhance a productivity of the battery 100.

A number of the recessed parts 12a1 is not particularly restricted if the effects of the technique disclosed herein is implemented. As shown in FIG. 5, the number of the recessed parts 12a1 might be 2, or in another embodiment, it might be equal to or more than 3, or 1. In addition, a shape of the recessed part 12a1 is not particularly restricted if the effects of the technique disclosed herein is implemented. As shown in FIG. 5, the shape of the recessed part 12a1 (for more detail, a shape of the recessed part 12a1 when the opening 12h of the case main body 12 is viewed from the front) might be rectangular, or might be various shapes as shown in second to eighth embodiments described later. For example, in a situation where the recessed parts are formed on both of the pair of narrow width surfaces 12a, the shapes of the recessed parts might be the same, or might be different from each other. Then, in the present embodiment, the recessed part 12a1 is formed along the length direction of the case main body 12 continuously from one of the openings 12h to the other one of the openings 12h, but in another embodiment, the recessed part might be formed intermittently.

A size of the recessed part 12a1 is not particularly restricted if the effects of the technique disclosed herein is implemented. Here, FIG. 8 is an explanation view that is for explaining a vicinity of the recessed part of FIG. 5. In FIG. 8, P represents a thickness of the narrow width surface 12a and Q represents a depth of the recessed part 12a1. It can be said that Q represents a distance from a bottom surface 12a6 (a bottom part) of the recessed part 12a1 to the inner surface (corresponding to 12a3 of FIG. 8) of the narrow width surface 12a in the thickness direction (corresponding to the Z direction of FIG. 8) of the narrow width surface 12a. A ratio (Q/P) of the depth Q of the recessed part 12a1 with respect to the thickness P of the narrow width surface 12a is, for example, equal to or more than 0.1, from a perspective of further suitably decreasing the contact of the inner surface of the case main body 12 with the electrode assembly 20, preferably equal to or more than 0.2, or further preferably equal to or more than 0.3 or equal to or more than 0.4. Although not particularly restricted, it is possible to make the depth Q of the recessed part 12a1, for example, be within a range of 0.01 mm to 1 mm. In addition, an upper limit of the ratio (Q/P) is, for example, equal to or less than 0.9, from a perspective of suitably ensuring a strength of the case main body 12, preferably equal to or less than 0.8 or equal to or less than 0.7, or further preferably equal to or less than 0.6 or equal to or less than 0.5.

Additionally, in FIG. 8, R represents a length of the narrow width surface 12a in the width direction (corresponding to the X direction of FIG. 8) and S represents a length of the recessed part 12a1 in the width direction of the narrow width surface 12a. A ratio (S/R) of the length S of the recessed part 12a1 in the width direction of the narrow width surface 12a with respect to the length R of the narrow width surface 12a in the width direction is, for example, equal to or more than 0.1, from a perspective of further suitably decreasing the contact area size of the inner surface of the case main body 12 with the electrode assembly 20, preferably equal to or more than 0.2, or further preferably equal to or more than 0.3 or equal to or more than 0.4. In addition, an upper limit of the ratio (S/R) is, for example, equal to or less than 0.9, from a perspective of suitably ensuring the strength of the case main body 12, preferably equal to or less than 0.8 or equal to or less than 0.7, or further preferably equal to or less than 0.6 or equal to or less than 0.5. Although not particularly restricted, it is possible to make the length S of the recessed part 12a1 in the width direction of the narrow width surface 12a, for example, be within a range of 0.01 mm to 1 mm.

The recessed part 12a1 might be present on only one of the pair of narrow width surfaces 12a, or might be present on both of them. On the other hand, in one suitable aspect, as shown in FIG. 5, the recessed part 12a1 is present on both of the pair of narrow width surfaces 12a. In accordance with such a configuration, a number of non-contact surfaces of the electrode assembly 20 with the case main body 12 is increased, the insertion resistance to the case main body 12 is decreased, and thus the insertability of the electrode assembly 20 to the case main body 12 is suitably enhanced.

It is possible to form the recessed part 12a1 at any position on the narrow width surface 12a, if the effects of the technique disclosed herein is implemented. On the other hand, in one suitable aspect, as shown by FIG. 8, the recessed part 12a1 is present at a central part 12a4 when the narrow width surface 12a is semantically divided into a pair of end parts 12a2 and the central part 12a4 along the width direction (corresponding to the X direction of FIG. 8). In accordance with such a configuration, the central part 12a4 becomes a non-contact part of the case main body 12 with the electrode assembly 20, not only the insertion resistance to the case main body 12 is decreased, but also portions other than the central part 12a4 (in other words, the pair of end parts 12a2) play roles of guiding for the insertion direction of the electrode assembly 20 so as to make an insertion posture of the electrode assembly 20 be stable, and therefore the insertability of the electrode assembly 20 to the case main body 12 is suitably enhanced. Incidentally, in another embodiment, the recessed part 12a1 might be present at the central part, when the narrow width surface 12a is semantically divided into three parts in the width direction so as to treat them as a pair of end parts and the central part. Alternatively, the recessed part 12a1 might be present at the central part when the narrow width surface 12a is semantically divided into five parts in the width direction so as to treat them as the pair of end parts and the central part. Alternatively, the recessed part 12a1 might be present at the central part when the narrow width surface 12a is semantically divided into seven parts in the width direction so as to treat them as the pair of end parts and the central part.

In one suitable aspect, as shown by FIG. 8, the pair of end parts 12a2 includes an end surface 12a3 at an inner side of the narrow width surface 12a, each end surface 12a3 is configured to be capable of guiding the insertion posture of the electrode assembly 20 when the electrode assembly 20 is inserted into the case main body 12. It can be also said that the end surface 12a3 is a guide surface configured to guide the insertion posture of the electrode assembly 20 into the case main body 12. In accordance with such a configuration, the end surface 12a3 of the narrow width surface 12a of the case main body 12 in the width direction can play a role of guiding when the electrode assembly 20 is inserted into the case main body 12, and thus it becomes easier to insert the electrode assembly 20 into the case main body 12.

In one suitable aspect, as shown by FIG. 8, respective end surfaces 12a3 are present on the same flat surface. A distance of opposed inner side surfaces of the pair of narrow width surfaces 12a is constant. Alternatively, it can be also said that the distances (corresponding to P of FIG. 8) of respective end surfaces 12a3 from the outer surface 12a5 of the narrow width surfaces 12a in the thickness direction (corresponding to the Z direction of FIG. 8) are the same. In accordance with such a configuration, the insertion posture of the electrode assembly 20 into the case main body 12 becomes stable, and thus it becomes easier to insert the electrode assembly 20 into the case main body 12.

In one suitable aspect, as shown in FIG. 6, each of the wide width surface 12b and the narrow width surface 12a is formed in a rectangular shape having a long side and a short side, and the long side is configured to elongate along the insertion direction (corresponding to the ID direction of FIG. 6) of the electrode assembly 20. The herein disclosed technique can induce a higher effect in a situation where the insertion distance of the electrode assembly is longer, and thus the configuration described above is suitable as an object to which the herein disclosed technique is applied. Although not particularly restricted, regarding the wide width surface 12b, a ratio of a length of the long side with respect to a length of the short side (a long side length / a short side length) is, for example, equal to or more than 2, from a perspective of being further suitable as the application object described above, preferably equal to or more than 3, or further preferably equal to or more than 4. An upper limit of the ratio (the long side length / the short side length) is, for example, equal to or less than 8, from a perspective of easily manufacturing the battery 100, preferably equal to or less than 7 or equal to or less than 6, or further preferably equal to or less than 5.

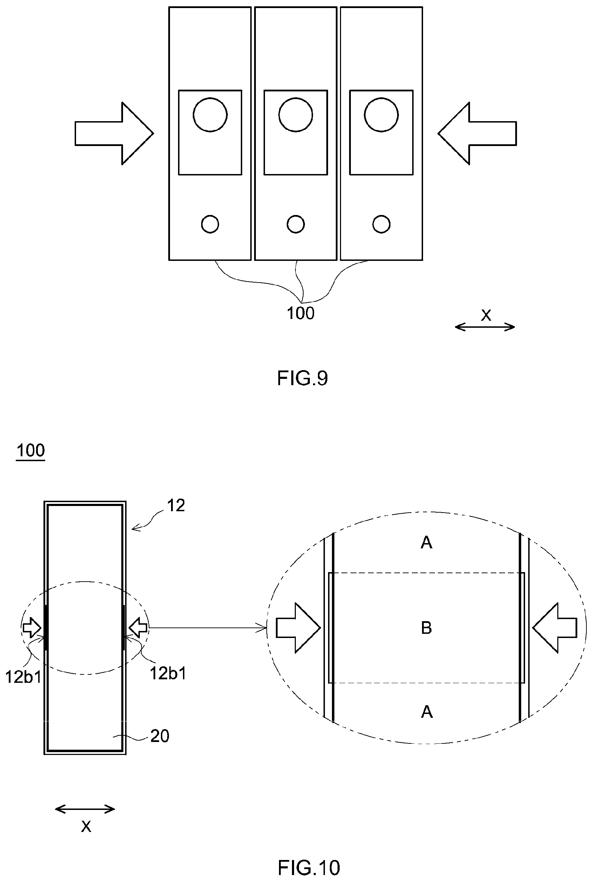

As the present disclosure is shown, one of advantages induced by the formation of the recessed part 12a1 on the narrow width surface 12a of the case main body 12 will be explained. Here, FIG. 9 is an explanation view that is for explaining a restriction of the battery in accordance with one embodiment. FIG. 10 is an explanation view that is for explaining a situation where the recessed part is present on the wide width surface. Incidentally, in FIG. 10, for the sake of implementing easily viewable manner of the drawings, illustrations of the positive electrode tab 23 are omitted. As shown in FIG. 9, the battery 100 is, for example, restricted to a direction of a white arrow so as to be used in a state of a battery pack. In that situation, the wide width surface 12b becomes a surface on which a restriction force is generated. Then, as shown by FIG. 10, in a situation where a recessed part 12b1 is formed on the wide width surface 12b, there is a possibility on the electrode assembly 20 to cause an area (corresponding to an area A of FIG. 10) on which the restriction force is generated and to cause an area (corresponding to an area B of FIG. 10) on which the restriction force is not generated. In that situation, the distance between the electrode plates becomes wider on the area B, and thus there is a fear that a chemical response progresses more slowly. Therefore, from a perspective of a battery performance or the like, it is possible to say that the recessed part 12a1 formed on the narrow width surface 12a is further preferable.

### <Manufacturing method of battery>

Next, an example of a manufacturing method of the battery 100 will be described. Incidentally, the explanation described below is not intended to restrict the manufacturing method of the battery 100.

At first, a manufacturing method of the case main body 12 will be described. Firstly, one metal plate is prepared. Then, regarding the metal plate, a portion corresponding to the narrow width surface 12a is subjected to a press molding, so as to form the recessed part 12a1. Next, at a predetermined position of the metal plate described above, a gas exhaust valve 13 is formed by a conventionally known method. Next, the metal plate on which the recessed part 12a1 and the gas exhaust valve 13 are formed is folded and bent to be molded in a cylindrical shape, and then a seam is joined (for example, welding and joining by laser welding, or the like). By doing this, it is possible to obtain the case main body 12. Incidentally, the recessed part 12a1 can be formed by a cutting work, or the like, with a milling cutter, too. Additionally, in the second to eighth embodiments described later, the shapes of the recessed parts are made to be variously different, but they can be formed in different shapes from each other by the cutting work, or the like, with the press molding or the milling cutter.

Next, the electrode assembly 20, having been manufactured by the conventionally known method, is prepared. Then, the positive electrode collecting member 32 and the negative electrode collecting member 42 are respectively joined to the positive electrode tab 23 and the negative electrode tab 24. The negative electrode terminal 40 included by the first lid body 14a and the negative electrode collecting member 42 are joined so as to be integrated together. Next, the integration described above is inserted into the case main body 12 having been manufactured as described above. Then, the positive electrode collecting member 32 and the positive electrode terminal 30 included by the second lid body 14b are joined. The case main body 12, and the first lid body 14a and the second lid body 14b, are joined to each other. Finally, by injecting the electrolytic solution from the liquid injection hole, it is possible to obtain the battery 100.

The battery 100 can be used for various purposes, and it can be suitably used as a power source (a drive power supply) for a motor mounted on a vehicle, for example, a passenger car, a truck, or the like. Although a type of the vehicle is not particularly restricted, it might be, for example, a plug-in hybrid vehicle (PHEV; Plug-in Hybrid Electric Vehicle), a hybrid vehicle (HEV; Hybrid Electric Vehicle), an electric vehicle (BEV; Battery Electric Vehicle), or the like.

Above, the embodiments of the herein disclosed technique have been explained. However, the above described explanation is merely an illustration, and is not to restrict the scope of claims. The technique recited in the scope of claims includes contents in which the specific examples illustrated in the above explanation are variously deformed or changed.

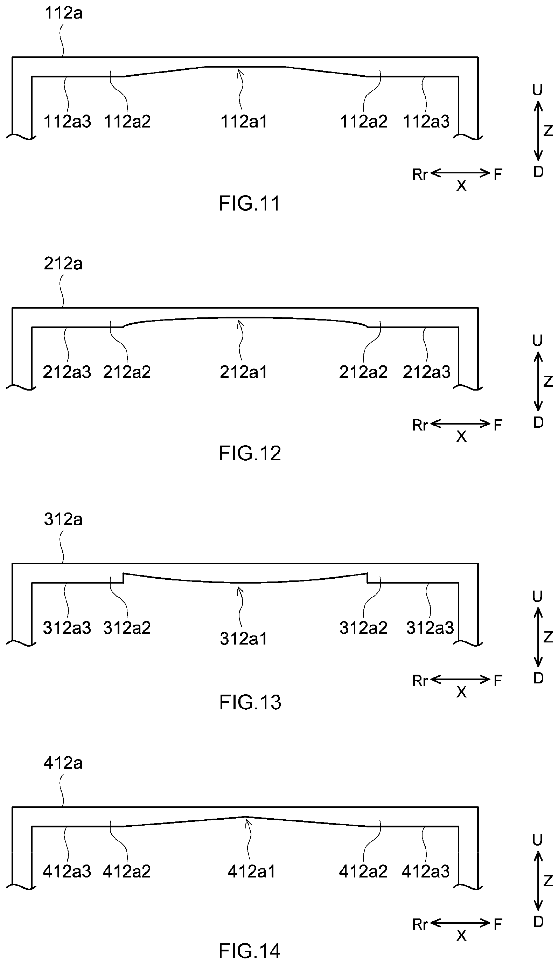

FIG. 11 is a correspondence diagram that shows the inside of the broken-line round frame of FIG. 5 in accordance with the second embodiment. In FIG. 11, 112a, 112a1, 112a2, and 112a3 respectively represent the narrow width surface, the recessed part, the end part, and the end surface. As shown by FIG. 11, in the second embodiment, a shape of the recessed part 112a1 (for more detail, a shape of the recessed part 112a1 when the opening of the case main body is viewed from the front) is a trapezoidal shape. Incidentally, about a number, size, and formed position of the recessed part 112a1, it is possible to suitably refer to a corresponding explanation point of the recessed part 12a1.

FIG. 12 is a correspondence diagram that shows the inside of the broken-line round frame of FIG. 5 in accordance with the third embodiment. In FIG. 12, 212a, 212a1, 212a2, and 212a3 respectively represent the narrow width surface, the recessed part, the end part, and the end surface. As shown by FIG. 12, in the third embodiment, a shape of the recessed part 212a1 (for more detail, a shape of the recessed part 212a1 when the opening of the case main body is viewed from the front) is a circular arc shape. Incidentally, about a number, size, and formed position of the recessed part 212a1, it is possible to suitably refer to the corresponding explanation point of the recessed part 12a1.

FIG. 13 is a correspondence diagram that shows the inside of the broken-line round frame of FIG. 5 in accordance with the fourth embodiment. In FIG. 13, 312a, 312a1, 312a2, and 312a3 respectively represent the narrow width surface, the recessed part, the end part, and the end surface. As shown by FIG. 13, in the fourth embodiment, a shape of the recessed part 312a1 (for more detail, a shape of the recessed part 312a1 when the opening of the case main body is viewed from the front) is a reverse circular arc shape. Incidentally, about a number, size, and formed position of the recessed part 312a1, it is possible to suitably refer to the corresponding explanation point of the recessed part 12a1. Additionally, in the fourth embodiment, a bottom surface (the bottom part) of the recessed part 312a1 means an apex of the reverse circular arc.

FIG. 14 is a correspondence diagram that shows the inside of the broken-line round frame of FIG. 5 in accordance with the fifth embodiment. In FIG. 14, 412a, 412a1, 412a2, and 412a3 respectively represent the narrow width surface, the recessed part, the end part, and the end surface. As shown by FIG. 14, in the fifth embodiment, a shape of the recessed part 412a1 (for more detail, a shape of the recessed part 412a1 when the opening of the case main body is viewed from the front) is a V formation groove shape. Incidentally, about a number, size, and formed position of the recessed part 412a1, it is possible to suitably refer to the corresponding explanation point of the recessed part 12a1.

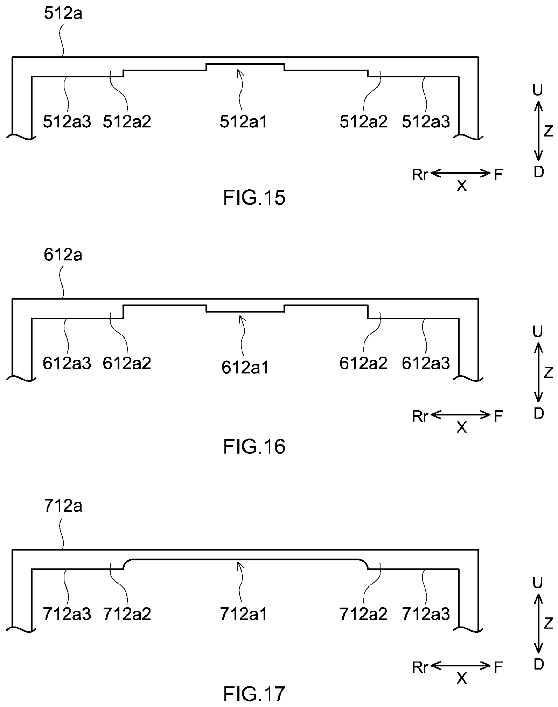

FIG. 15 is a correspondence diagram that shows the inside of the broken-line round frame of FIG. 5 in accordance with the sixth embodiment. In FIG. 15, 512a, 512a1, 512a2, and 512a3 respectively represent the narrow width surface, the recessed part, the end part, and the end surface. As shown by FIG. 15, in the sixth embodiment, a shape of the recessed part 512a1 (for more detail, a shape of the recessed part 512a1 when the opening of the case main body is viewed from the front) is a stepped shape. Incidentally, about a number, size, and formed position of the recessed part 512a1, it is possible to suitably refer to the corresponding explanation point of the recessed part 12a1. Additionally, in the sixth embodiment, the bottom surface (the bottom part) of the recessed part 512a1 means a surface of a step being closest to an outer surface of the narrow width surface 512a.

FIG. 16 is a correspondence diagram that shows the inside of the broken-line round frame of FIG. 5 in accordance with the seventh embodiment. In FIG. 16, 612a, 612a1, 612a2, and 612a3 respectively represent the narrow width surface, the recessed part, the end part, and the end surface. As shown by FIG. 16, in the seventh embodiment, a shape of the recessed part 612a1 (for more detail, a shape of the recessed part 612a1 when the opening of the case main body is viewed from the front) is a stepped shape. In the present embodiment, different from the sixth embodiment, one step among three steps is a reverse step with respect to two steps. Incidentally, about a number, size, and formed position of the recessed part 612a1, it is possible to suitably refer to the corresponding explanation point of the recessed part 12a1. Additionally, in the seventh embodiment, the bottom surface (the bottom part) of the recessed part 612a1 means a surface of a step being closest to an inner surface of the narrow width surface 612a.

FIG. 17 is a correspondence diagram that shows the inside of the broken-line round frame of FIG. 5 in accordance with the eighth embodiment. In FIG. 17, 712a, 712a1, 712a2, and 712a3 respectively represent the narrow width surface, the recessed part, the end part, and the end surface. As shown by FIG. 17, in the eighth embodiment, a shape of the recessed part 712a1 (for more detail, a shape of the recessed part 712a1 when the opening of the case main body is viewed from the front) is an oblong hole shape. Incidentally, about a number, size, and formed position of the recessed part 712a1, it is possible to suitably refer to the corresponding explanation point of the recessed part 12a1.

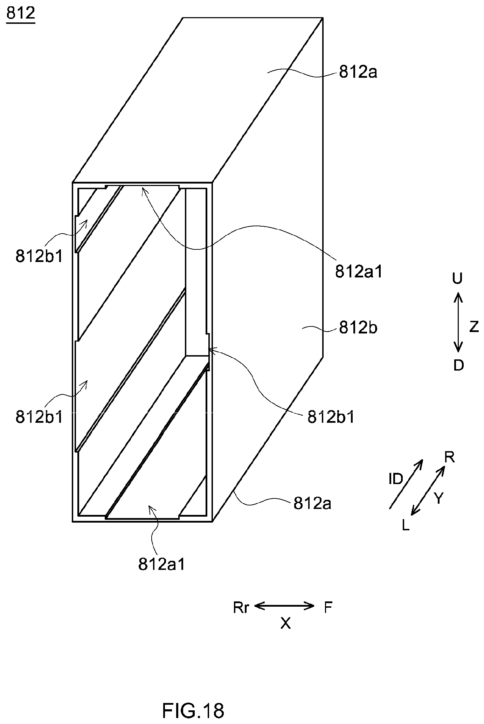

FIG. 18 is a schematic view that shows a configuration of the main body case in accordance with another embodiment. In FIG. 18, 812a, 812a1, 812b, and 812b1 respectively represent the narrow width surface, the recessed part, the wide width surface, and a wide width surface recessed part. As shown by FIG. 18, in another embodiment, at least one (here, both) wide width surface 812b of the pair of wide width surfaces 812b is provided with the wide width surface recessed part 812b1 configured to elongate along the length direction of the case main body (corresponding to the Y direction of FIG. 18). In accordance with such a configuration, a number of the non-contact surfaces of the electrode assembly 20 with the case main body 12 is increased, the insertion resistance is decreased, and thus the insertability of the electrode assembly 20 into the case main body 12 is suitably enhanced. Incidentally, about a number, size, and formed position of the wide width surface recessed part 812b1, it is possible to suitably refer to the corresponding explanation point of the recessed part 12a1 while "narrow width surface" is replaced with "wide width surface".

While described above, as a particular aspect of the herein disclosed technique, it is possible to use a recitation of each item described below.

Item 1: An electricity storage device, comprising: a case main body which is formed in a rectangular cylindrical shape and whose both sides in a length direction are opened; an electrode assembly that is accommodated by the case main body; a first lid body that is installed on an opening at one end side in the length direction of the case main body; and a second lid body that is installed on an opening at the other end side in the length direction of the case main body, wherein the case main body comprises a pair of wide width surfaces being opposed to each other and a pair of narrow width surfaces that are opposed to each other and that are configured to continue to the pair of wide width surfaces, and a recessed part configured to elongate along the length direction of the case main body is present at an inner side of at least one narrow width surface of the pair of narrow width surfaces.

Item 2: The electricity storage device recited in Item 1, wherein the recessed part is present at both of the pair of narrow width surfaces.

Item 3: The electricity storage device recited in Item 1 or 2, wherein the recessed part is present at a central part when the narrow width surface is semantically divided along a width direction into a pair of end parts and the central part.

Item 4: The electricity storage device recited in Item 3, wherein the pair of end parts comprise end surfaces at the inner side of the narrow width surface, and each of the end surfaces is configured to be capable of guiding an insertion posture of the electrode assembly when the electrode assembly is inserted into the case main body.

Item 5: The electricity storage device recited in Item 4, wherein both of the end surfaces are present on the same flat surface.

Item 6: The electricity storage device recited in any one of Items 1 to 5, wherein each of the wide width surfaces and the narrow width surfaces is formed in a rectangular shape comprising a long side and a short side, and the long side is configured to elongate along an insertion direction of the electrode assembly.

Item 7: The electricity storage device recited in any one of Items 1 to 6, wherein at least one wide width surface among the pair of wide width surfaces is provided with a wide width surface recessed part that is configured to elongate along the length direction of the case main body.

## Claims

1. An electricity storage device (100), comprising:
a case main body (12) which is formed in a rectangular cylindrical shape and whose both sides in a length direction are opened;
an electrode assembly (20) that is accommodated by the case main body (12);
a first lid body (14a) that is installed on an opening at one end side in the length direction of the case main body (12); and
a second lid body (14b) that is installed on an opening at the other end side in the length direction of the case main body (12),
wherein the case main body (12) comprises:
a pair of wide width surfaces (12b) being opposed to each other; and
a pair of narrow width surfaces (12a) that are opposed to each other and that are configured to continue to the pair of wide width surfaces (12b), and
a recessed part (12a1) configured to elongate along the length direction of the case main body (12) is present at an inner side of at least one narrow width surface (12a) of the pair of narrow width surfaces (12a).

2. The electricity storage device (100) according to claim 1, wherein
the recessed part (12a1) is present at both of the pair of narrow width surfaces (12a).

3. The electricity storage device (100) according to claim 1 or 2, wherein
the recessed part (12a1) is present at a central part (12a4) when the narrow width surface (12a) is semantically divided along a width direction into a pair of end parts (12a2) and the central part (12a4).

4. The electricity storage device (100) according to claim 3, wherein
the pair of end parts (12a2) comprise end surfaces (12a3) at the inner side of the narrow width surface (12a), and each of the end surfaces (12a3) is configured to be capable of guiding an insertion posture of the electrode assembly when the electrode assembly (20) is inserted into the case main body (12).

5. The electricity storage device (100) according to claim 4, wherein
both of the end surfaces (12a3) are present on the same flat surface.

6. The electricity storage device (100) according to any one of claims 1 to 5, wherein
each of the wide width surfaces (12b) and the narrow width surfaces (12a) is formed in a rectangular shape comprising a long side and a short side, and
the long side is configured to elongate along an insertion direction of the electrode assembly (20).

7. The electricity storage device according to any one of claims 1 to 6, wherein
at least one wide width surface (812b) among the pair of wide width surfaces (812b) is provided with a wide width surface recessed part (812b1) that is configured to elongate along the length direction of the case main body (812).
